# EUROPÄISCHE PATENTSCHRIFT

(11) **EP 3 139 293 B1**
(45) Veröffentlichungstag und Bekanntmachung des Hinweises auf die Patenterteilung: **08.09.2021**
(21) Anmeldenummer: 16193943.4
(22) Anmeldetag: 16.01.2015
(51) Int. Cl.: G06F 21/32, H04L 9/32, H04L 29/06

(54) **VERFAHREN ZUM IDENTIFIZIEREN EINES BENUTZERS UNTER VERWENDUNG EINES KOMMUNIKATIONSGERÄTES**
METHOD FOR IDENTIFYING A USER USING A COMMUNICATION DEVICE
PROCÉDÉ D'IDENTIFICATION D'UN UTILISATEUR VIA UN APPAREIL DE COMMUNICATION

(30) Priorität: 16.01.2014 DE 102014100463
(43) Veröffentlichungstag der Anmeldung: 08.03.2017
(62) Teilanmeldung aus: 15701131.3
(73) Patentinhaber: Bundesdruckerei GmbH, 10969 Berlin (DE)
(72) Erfinder: MAGGIONI, Christoph, 10961 Berlin (DE); RACH, Andreas, 10119 Berlin (DE)
(74) Vertreter: Patentship Patentanwaltsgesellschaft mbH

(56) Entgegenhaltungen:
- EP-A2- 2 291 978
- DE-A1-102010 028 133
- US-A1- 2012 075 442
- Anonymous: "Passport Scanner, ID scanner, KYC, AML, ID Check | IDsmart", , 11. Dezember 2013 (2013-12-11), XP055318429, Gefunden im Internet: URL:https://web.archive.org/web/2013121100 3544/http://idscan.co.uk/id-check-idsmart [gefunden am 2016-11-10]
- Moritz Horsch ET AL: "Mobile Authentisierung mit dem neuen Personalausweis (MONA) Mobile authentication using the new German identity card Master-Thesis von", , 31. Juli 2011 (2011-07-31), XP055177866, Gefunden im Internet: URL:https://www.cdc.informatik.tu-darmstad t.de/mona/pubs/201107_MA_Mobile Authentisierung mit dem neuen Personalausweis (MONA).pdf [gefunden am 2015-03-19]
- Anonymous: "Neuer Personalausweis per Handy lesbar", , 26. Februar 2010 (2010-02-26), XP055177902, Gefunden im Internet: URL:http://www.t-online.de/handy/smartphon e/id_21887930/neuer-personalausweis-per-ha ndy-lesbar.html [gefunden am 2015-03-19]
- Cameroon Knowhow ET AL: "International Civil Aviation Organization Approved by the Secretary General and published under his authority Machine Readable Travel Documents Sixth Edition - 2006 Part 1 Machine Readable Passports Volume 2 Specifications for Electronically Enabled Passports with Biometric Identification Capability", 2105 South Africa. Avex Air Training (Pty) Ltd., Private Bag X102, Halfway House 1a Ringway Trading Estate, 31 December 2006 (2006-12-31), pages 1-131, XP055152747, Retrieved from the Internet: URL:http://www.icao.int/publications/Docum ents/9303_p1_v2_cons_en.pdf [retrieved on 2014-11-13]
- Anonymous: "Security Assertion Markup Language - Wikipedia", , 14 January 2014 (2014-01-14), XP055728634, Retrieved from the Internet: URL:https://en.wikipedia.org/w/index.php?t itle=Security_Assertion_Markup_Language&ol did=590672970 [retrieved on 2020-09-08]

## Beschreibung

Die vorliegende Erfindung betrifft das Gebiet des Identifizierens eines Benutzers unter Verwendung eines Kommunikationsgerätes.

Die Druckschrift "Anonymous: "Passport Scanner, ID scanner, KYC, AML, ID Check IDsmart", 11. Dezember 2013 (2013-12-11), XP055318429, Gefunden im Internet: URL: https://web.archive.org/web/20131211003544/http://idscan.co.uk/id-check-idsmart [gefunden am 2016-11-10]" offenbart ein Verfahren zur Überprüfung der Identität eines Benutzers unter Verwendung eines Kommunikationsgerätes.

Die Offenlegungsschrift US 2012/075442 A1 offenbart ein Verfahren zum Identifizieren eines Benutzers unter Verwendung eines Kommunikationsgerätes.

Die Druckschrift "Moritz Horsch ET AL: "Mobile Authentisierung mit dem neuen Personalausweis (MONA) Mobile authentication using the new German identity card Master-Thesis von", 31. Juli 2011 (2011-07-31), XP055177866, Gefunden im Internet: URL:https://www.cdc.informatik.tu-darmstadt.de/mona/pubs/201107_MA_Mobile Authentisierung mit dem neuen Personalausweis (MONA).pdf [gefunden am 2015-03-19]" ist eine Master-Thesis auf dem Gebiet der mobilen Authentisierung mit dem neuen Personalausweis.

Die Druckschrift "Anonymous: "Neuer Personalausweis per Handy lesbar", 26. Februar 2010 (2010-02-26), XP055177902, Gefunden im Internet: URL:http://www.t-online.de/handy/smartphone/id_21887930/neuer-personalausweis-per-handy-lesbar.html [gefunden am 2015-03-19]" beschreibt ein Auslesen von elektronischen Daten aus dem neuen Personalausweis mittels NFC.

Die Offenlegungsschrift EP 2 291 978 A2 offenbart ein elektronisches Unterhaltungsgerät, beispielsweise ein Fernsehgerät. Mehrere Nutzer können das Fernsehgerät nutzen, wobei sich diese Nutzer vor einer Nutzung gegenüber dem Fernsehgerät authentifizieren müssen.

Die Druckschrift "Cameroon Knowhow ET AL: "International Civil Aviation Organization Approved by the Secretary General and published under his authority Machine Readable Travel Documents Sixth Edition - 2006 Part 1 Machine Readable Passports Volume 2 Specifications for Electronically Enabled Passports with Biometric Identification Capability", 2105 South Africa. Avex Air Training (Pty) Ltd., Private Bag X102, Halfway House 1a Ringway Trading Estate, 31. Dezember 2006 (2006-12-31), Seiten 1-131, XP055152747, Gefunden im Internet: URL:http://www.icao.int/publications/Documents/9303_p1_v2_cons_en.pdf [gefunden am 2014-11-13]" ist auf Spezifikationen von maschinenlesbaren Reisedokumenten gerichtet.

Die Offenlegungsschrift DE 10 2010 028133 A1 offenbart ein Verfahren zum Lesen eines Attributs aus einem ID-Token.

Die Druckschrift "Anonymous: "Security Assertion Markup Language - Wikipedia", 14. Januar 2014 (2014-01-14), XP055728634, Gefunden im Internet: URL:https://en.wikipedia.org/w/index.php?title=Security_Assertion_Markup_Language&ol did=590672970 (gefunden am 2020-09-08)" offenbart einen XML-Framework.

Das Identifizieren eines Benutzers durch einen Anbieter von Identifikationsdiensten kann mittels eines Identifikationsdokumentes durchgeführt werden. Hierzu können Personendaten des Benutzers mit Personendaten auf dem Identifikationsdokument durch eine Person, beispielsweise einen Mitarbeiter des Anbieters von Identifikationsdiensten, in einer Filiale des Anbieters von Identifikationsdiensten verglichen werden. Dies wird häufig jedoch als unkomfortabel empfunden, da das Aufsuchen der Filiale des Anbieters von Identifikationsdiensten für den Benutzer einen zeitlichen Mehraufwand darstellen kann. Ferner ist das Vergleichen der Personendaten des Benutzers mit Personendaten auf dem Identifikationsdokument durch eine Person aufwendig und kostenintensiv.

Es ist daher die Aufgabe der vorliegenden Erfindung, ein effizientes, kostengünstiges und automatisiertes Konzept zum Identifizieren eines Benutzers zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe durch Verwendung eines Kommunikationsgerätes gelöst werden kann, welches ausgebildet ist, zur Identifizierung des Benutzers ein biometrisches Merkmal des Benutzers zu erfassen und an einen elektronischen Identifikationsdienst zu übertragen.

Gemäß einem ersten Aspekt betrifft die Erfindung ein Verfahren zum Identifizieren eines Benutzers unter Verwendung eines Kommunikationsgerätes, wobei dem Benutzer ein Identifikationsdokument zugeordnet ist, mit: Erfassen eines biometrischen Merkmals des Benutzers mittels des Kommunikationsgerätes, um ein erfasstes biometrisches Merkmal zu erhalten; Übertragen des erfassten biometrischen Merkmals an einen elektronischen Identifikationsdienst über ein Kommunikationsnetzwerk durch das Kommunikationsgerät; und Vergleichen des erfassten biometrischen Merkmals mit einem biometrischen Referenzmerkmal durch den elektronischen Identifikationsdienst, um den Benutzer zu identifizieren.

Der elektronische Identifikationsdienst überträgt ansprechend auf eine Identifizierung des Benutzers über ein Kommunikationsnetzwerk eine Bestätigung der Identifizierung an einen elektronischen Netzwerkdienst.

Dadurch wird der Vorteil erreicht, dass der Benutzer auf effiziente Weise identifiziert werden kann.

Der Benutzer kann ein Dienstnutzer sein.

Das Kommunikationsgerät kann ein Computer, ein Computerterminal, beispielsweise ein von einem Anbieter von Identifikationsdiensten bereitgestellter Kiosk oder Automat, ein Handgerät, ein Mobiltelefon oder ein Smartphone sein, welches eine Erfassungseinrichtung und eine Kommunikationsschnittstelle umfassen kann.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Das biometrische Merkmal des Benutzers kann ein Fingerabdruck des Benutzers, ein Gesichtsbild des Benutzers, ein Irisabbild eines Auges des Benutzers oder ein Stimmmuster des Benutzers sein. Das biometrische Referenzmerkmal kann ein Fingerabdruck, ein Gesichtsbild, ein Irisabbild eines Auges oder ein Stimmmuster sein.

Das Erfassen des biometrischen Merkmals des Benutzers kann durch das Kommunikationsgerät mittels einer Bildkamera, einer Videokamera, eines Fingerabdrucksensors und/oder eines Mikrophons durchgeführt werden.

Das Vergleichen des erfassten biometrischer Merkmals mit dem biometrischen Referenzmerkmal kann mittels eines Mustervergleichs durchgeführt werden. Der Mustervergleich kann ein Vergleich von Bildmerkmalen, beispielsweise Ecken, Kanten, relativen Abständen, Positionen und/oder Lagen, sein. Ferner kann der Mustervergleich ein Vergleich von Stimmmustern sein.

Der elektronische Identifikationsdienst kann durch einen Computer oder durch einen Dienstserver bereitgestellt sein, welcher eine Kommunikationsschnittstelle und einen Prozessor umfassen kann. Der elektronische Identifikationsdienst kann als Identanbieter oder Identdienstanbieter für die Identifikation einer Mehrzahl von unterschiedlichen Benutzern vorgesehen sein.

Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Gemäß einer Ausführungsform ist das erfasste biometrische Merkmal ein Gesichtsbild des Benutzers oder ein Stimmmuster des Benutzers oder ein Fingerabdruck des Benutzers oder ein Irisabbild eines Auges des Benutzers. Dadurch wird der Vorteil erreicht, dass ein effizientes biometrisches Merkmal zum Identifizieren des Benutzers verwendet werden kann.

Gemäß einer Ausführungsform umfasst das Verfahren ferner die Schritte: Empfangen einer Aufforderung zum Übertragen des erfassten biometrischen Merkmals an den elektronischen Identifikationsdienst durch das Kommunikationsgerät; und Übertragen des erfassten biometrischen Merkmals an den elektronischen Identifikationsdienst ansprechend auf den Empfang der Aufforderung durch das Kommunikationsgerät, insbesondere mittels einer Videokonferenzverbindung zwischen dem Kommunikationsgerät und dem elektronischen Identifikationsdienst oder mittels einer Übertragung eines Standbildes. Dadurch wird der Vorteil erreicht, dass eine Durchführung des Verfahrens auf effiziente Weise initiiert werden kann.

Zum Erfassen des biometrischen Merkmals kann ferner eine Videoaufnahme des Benutzers oder eine Bildsequenz mit Aufnahmen des Benutzers erstellt werden, welche an den elektronischen Identifikationsdienst übertragen wird. Der elektronische Identifikationsdienst kann ferner ausgebildet sein, aus der übertragenen Videoaufnahme oder Bildsequenz ein biometrisches Merkmal, beispielsweise ein Gesichtsbild, des Benutzers zu extrahieren und mit einem vorgespeicherten biometrischen Referenzmerkmal zu vergleichen. Hierbei kann die übertragene Videoaufnahme oder Bildsequenz durch den elektronischen Identifikationsdienst zwischengespeichert werden, um bei mehrfacher Ausführung des Verfahrens asynchron eine sequentielle Abarbeitung in einem Stapelverfahren zu ermöglichen.

Der elektronische Identifikationsdienst kann die Aufforderung zum Übertragen des erfassten biometrischen Merkmals an den elektronischen Identifikationsdienst durch das Kommunikationsgerät an das Kommunikationsgerät übertragen. Ferner kann die Aufforderung zum Übertragen des erfassten biometrischen Merkmals an den elektronischen Identifikationsdienst durch das Kommunikationsgerät durch Tätigen einer Eingabe des Benutzers an dem Kommunikationsgerät, beispielsweise einer Identifizierungsanfrage, oder durch eine Anfrage über eine Softwareschnittstelle, sodass ein Dienst bzw. Netzwerkdienst oder eine Applikation bei einem Benutzer bzw. Nutzer die Identifizierungsanfrage bei dem elektronischen Identifikationsdienst, beispielsweise Identifikationsservice, anstoßen kann, gebildet sein.

Die Durchführung des Verfahrens kann durch einen auf einem Prozessor des Kommunikationsgerätes ausgeführten Programmcode, beispielsweise einer Applikation oder App, ansprechend auf Empfang einer Identifizierungsanfrage, beispielsweise von einem elektronischen Netzwerkdienst, initiiert werden, insbesondere mittels einer Software-Schnittstelle initiiert werden.

Die Videokonferenzverbindung kann eine audiovisuelle Kommunikationsverbindung zwischen dem Kommunikationsgerät und dem elektronischen Identifikationsdienst sein. Beispielsweise wird mittels der Videokonferenzverbindung eine Verbindung zwischen dem Benutzer und einem Call-Center aufgebaut, um Personendaten, insbesondere das Gesichtsbild des Benutzers, zu vergleichen. Hierbei können asynchron Video- oder Bilddaten an einen entfernten Dienst oder an ein Call-Center, übertragen werden, wo sie automatisch mit Referenzdaten bzw. Referenzmaterial abgeglichen werden.

Das Verfahren umfasst ferner die Schritte: Auslesen des biometrischen Referenzmerkmals aus einem elektronischen Schaltkreis des Identifikationsdokumentes mittels des Kommunikationsgerätes, um ein ausgelesenes biometrisches Referenzmerkmal zu erhalten; und Übertragen des ausgelesenen biometrischen Referenzmerkmals durch das Kommunikationsgerät über das Kommunikationsnetzwerk an den elektronischen Identifikationsdienst, insbesondere gemeinsam mit dem erfassten biometrischen Merkmal. Dadurch wird der Vorteil erreicht, dass ein biometrisches Referenzmerkmal bereitgestellt werden kann.

Der elektronische Schaltkreis kann ein Chip sein, auf welchem ein biometrisches Referenzmerkmal vorgespeichert sein kann. Das auf dem elektronischen Schaltkreis vorgespeicherte biometrische Referenzmerkmal kann über eine kontaktbehaftete oder eine kontaktlose Schnittstelle, beispielsweise eine Funkschnittstelle, ausgelesen werden.

Das Auslesen des biometrisches Referenzmerkmales kann über eine Kommunikationsschnittstelle des Kommunikationsgerätes durchgeführt werden. Die Kommunikationsschnittstelle kann eine kontaktbehaftete Schnittstelle oder eine kontaktlose Schnittstelle, beispielsweise eine Funkschnittstelle, sein.

Das Auslesen des biometrischen Referenzmerkmals aus dem elektronischen Schaltkreis des Identifikationsdokumentes mittels des Kommunikationsgerätes umfasst ferner ein Auslesen eines Personendatums, um ein ausgelesenes Personendatum zu erhalten, und wobei das Übertragen des ausgelesenen biometrischen Referenzmerkmals durch das Kommunikationsgerät über das Kommunikationsnetzwerk an den elektronischen Identifikationsdienst ferner ein Übertragen des ausgelesenen Personendatums an den elektronischen Identifikationsdienst umfasst. Dadurch wird der Vorteil erreicht, dass ein Personendatum des Benutzers bereitgestellt werden kann, welches die Identität des Benutzers angeben kann.

Gemäß einer Ausführungsform wird das ausgelesene Personendatum ansprechend auf eine Identifizierung des Benutzers durch den elektronischen Identifikationsdienst über ein Kommunikationsnetzwerk an einen elektronischen Netzwerkdienst übertragen. Dadurch wird der Vorteil erreicht, dass dem elektronischen Netzwerkdienst ein überprüftes Personendatum des Benutzers oder eine Identitätsbestätigung bereitgestellt werden kann.

Ferner kann ein vom elektronischen Netzwerkdienst erfasstes Personendatum bestätigt werden, um die Identität des Benutzers zu bestätigen.

Der elektronische Netzwerkdienst kann ein weiterer Dienst sein, welcher die Identität des Benutzers zum Ausführen einer Anwendung, beispielsweise Electronic Banking, benötigt. Der elektronische Dienst kann durch einen Computer oder einen Dienstserver bereitgestellt sein.

Gemäß einer Ausführungsform wird das Auslesen des biometrischen Referenzmerkmales aus dem elektronischen Schaltkreis des Identifikationsdokumentes unter Verwendung von Nahfeldkommunikation oder von Radiofrequenzidentifikation durchgeführt. Dadurch wird der Vorteil erreicht, dass das biometrische Referenzmerkmal effizient ausgelesen werden kann.

Die Nahfeldkommunikation kann eine Kommunikation mittels Near-Field-Communication (NFC), beispielsweise nach dem Standard ISO/IEC 14443 oder ISO/IEC 18092, sein.

Die Radiofrequenzidentifikation kann eine Kommunikation mittels Radio-Frequency-Identification (RFID), beispielsweise nach dem Standard ISO/IEC 14443 oder ISO/IEC 18000-3, sein.

Gemäß einer Ausführungsform umfasst das Verfahren ferner den Schritt: Authentifizieren des Kommunikationsgerätes gegenüber dem Identifikationsdokument unter Verwendung einer Identifikationskennung des Identifikationsdokumentes, wobei das biometrische Referenzmerkmals aus einem elektronischen Schaltkreis bei Authentifizierung des Kommunikationsgerätes gegenüber dem Identifikationsdokument ausgelesen wird. Dadurch wird der Vorteil erreicht, dass die im elektronischen Schaltkreis des Identifikationsdokumentes gespeicherten biometrischen Referenzmerkmale nur bei autorisiertem Zugriff freigegeben werden.

Gemäß einer Ausführungsform umfasst das Verfahren ferner die Schritte: Erfassen von Daten aus einer maschinenlesbaren Zone des Identifikationsdokumentes mittels einer Bildkamera des Kommunikationsgerätes; und Extrahieren der Identifikationskennung des Identifikationsdokumentes aus den erfassten Daten. Dadurch wird der Vorteil erreicht, dass die Identifikationskennung auf effiziente Weise bereitgestellt werden kann.

Die maschinenlesbare Zone kann ein aufgedruckter Bereich auf dem Identifikationsdokument sein.

Die Daten können in Form einer aufgedruckten Zeichenkette innerhalb einer maschinenlesbaren Zone des Identifikationsdokumentes vorliegen. Zum Erfassen der Daten aus der maschinenlesbaren Zone des Identifikationsdokumentes kann ein Bild der maschinenlesbaren Zone des Identifikationsdokumentes mittels der Bildkamera des Kommunikationsgerätes aufgenommen werden, aus welchem die Daten, beispielsweise mittels einer Zeichenerkennung, extrahiert werden.

Gemäß einer Ausführungsform können Daten aus weiteren bzw. anderen Bereichen des Identifikationsdokumentes mittels der Bildkamera des Kommunikationsgerätes erfasst werden. Hierzu kann mittels der Bildkamera des Kommunikationsgerätes ein Bild des Identifikationsdokumentes aufgenommen werden, aus welchem die Daten, beispielsweise mittels einer Zeichenerkennung, extrahiert werden.

Gemäß einer Ausführungsform wird die Gültigkeit des Identifikationsdokumentes mittels der erfassten Daten überprüft. Dadurch wird der Vorteil erreicht, dass das Identifikationsdokument auf effiziente Weise überprüft werden kann.

Die Gültigkeit des Identifikationsdokumentes kann unter Verwendung von Prüfziffern überprüft werden.

Gemäß einer Ausführungsform kann die Gültigkeit des Identifikationsdokumentes unter Verwendung anderer Daten, beispielsweise Daten aus einer Überprüfung einer dem Identifikationsdokument zugeordneten elektronischen Signatur oder einer Chipsignaturprüfung, bzw. deren Abgleich auf Konsistenz oder Übereinstimmung zueinander überprüft werden.

Gemäß einer Ausführungsform kann zur Überprüfung der Gültigkeit des Identifikationsdokumentes eine Prüfung der Zertifikatskette einer dem Identifikationsdokument zugeordneten elektronischen Signatur, beispielsweise einer Chipsignatur, durchgeführt werden. Hierzu kann ein Referenzzertifikat in einem Speicher des Kommunikationsgerätes vorgespeichert sein.

Gemäß einer Ausführungsform wird das Auslesen des biometrischen Referenzmerkmals aus dem elektronischen Schaltkreis des Identifikationsdokumentes unter Verwendung des Basic Access Control Protokolls durchgeführt. Dadurch wird der Vorteil erreicht, dass ein effizientes Protokoll zum Auslesen des biometrischen Referenzmerkmals aus dem elektronischen Schaltkreis des Identifikationsdokumentes verwendet werden kann.

Gemäß einer Ausführungsform, welche nicht Teil der Erfindung ist, umfasst das Verfahren ferner den Schritt: Auslesen des biometrischen Referenzmerkmals aus einer Datenbank durch den elektronischen Identifikationsdienst, um ein ausgelesenes biometrisches Referenzmerkmal zu erhalten. Dadurch wird der Vorteil erreicht, dass ein biometrisches Referenzmerkmal auf effiziente Weise bereitgestellt werden kann.

Die Datenbank kann in einem Speicher des elektronischen Identifikationsdienstes gespeichert sein.

Gemäß einer Ausführungsform wird das Übertragen des erfassten biometrischen Merkmals an den elektronischen Identifikationsdienst über ein Kommunikationsnetzwerk durch das Kommunikationsgerät unter Verwendung eines Transportschichtsicherheitsprotokolls oder verschlüsselt durchgeführt.

Das Transportschichtsicherheitsprotokoll kann ein Transport Layer Security (TLS) Protokoll sein.

Gemäß einer Ausführungsform überträgt der elektronische Identifikationsdienst ferner ansprechend auf eine Identifizierung des Benutzers über ein Kommunikationsnetzwerk eine Bestätigung der Identifizierung an das Kommunikationsgerät oder an den elektronischen Netzwerkdienst. Dadurch wird der Vorteil erreicht, dass eine Identifizierung des Benutzers auf effiziente Weise bestätigt werden kann.

Gemäß einer Ausführungsform wird die Bestätigung auf einer Anzeigeeinrichtung des Kommunikationsgerätes angezeigt. Dadurch wird der Vorteil erreicht, dass dem Benutzer eine Identifizierung durch den elektronischen Identifikationsdienst auf effiziente Weise angezeigt werden kann.

Ein zweiter Aspekt, welcher nicht Teil der Erfindung ist, betrifft ein Kommunikationsgerät zum Identifizieren eines Benutzers, wobei dem Benutzer ein Identifikationsdokument zugeordnet ist, mit: einer Kommunikationsschnittstelle zum Empfangen einer Aufforderung zur Übersendung eines biometrischen Merkmals des Benutzers an einen elektronischen Identifikationsdienst; und einer Erfassungseinrichtung zum Erfassen eines biometrischen Merkmals des Benutzers ansprechend auf den Empfang der Aufforderung, um ein erfasstes biometrisches Merkmal zu erhalten; und wobei die Kommunikationsschnittstelle ferner ausgebildet ist, das erfasste biometrische Merkmal an den elektronischen Identifikationsdienst über ein Kommunikationsnetzwerk zu übertragen. Der elektronische Identifikationsdienst überträgt in einer Ausführungsform ansprechend auf eine Identifizierung des Benutzers über ein Kommunikationsnetzwerk eine Bestätigung der Identifizierung an das Kommunikationsgerät, wobei die Kommunikationsschnittstelle ferner ausgebildet ist, die Bestätigung zu empfangen, und/oder wobei das Kommunikationsgerät eine Anzeigeeinrichtung aufweist, welche ausgebildet ist, die Bestätigung anzuzeigen.

Dadurch wird der Vorteil erreicht, dass ein Kommunikationsgerät zum Identifizieren eines Benutzers bereitgestellt werden kann.

Gemäß einer Ausführungsform weist die Erfassungseinrichtung eine digitale Bildkamera zur Erfassung eines Gesichtsbildes oder von Gesichtsbildern des Benutzers, wobei das Gesichtsbild des Benutzers das erfasste biometrische Merkmal ist, oder eine digitale Videokamera zur Erfassung eines Gesichtsvideos des Benutzers, wobei das Gesichtsbild des Benutzers das erfasste biometrische Merkmal ist, oder eine digitale Bildkamera zur Erfassung eines Irisabbildes eines Auges des Benutzers, wobei das Irisabbild des Auges des Benutzers das erfasste biometrische Merkmal ist, oder einen Fingerabdrucksensor zum Erfassen eines Fingerabdruckes des Benutzers, wobei der Fingerabdruck des Benutzers das erfasste biometrische Merkmal ist, oder ein Mikrophon zur Erfassung eines Stimmmusters des Benutzers, wobei das Stimmmuster des Benutzers das biometrische Merkmal ist, auf. Dadurch wird der Vorteil erreicht, dass ein biometrisches Merkmal des Benutzers effizient erfasst werden kann.

Gemäß einer Ausführungsform umfasst das Kommunikationsgerät eine weitere Kommunikationsschnittstelle, insbesondere eine Nahfeldschnittstelle, wobei die weitere Kommunikationsschnittstelle ausgebildet ist, das biometrische Referenzmerkmal aus einem elektronischen Schaltkreis des Identifikationsdokumentes auszulesen, und wobei die Kommunikationsschnittstelle ferner ausgebildet ist, das biometrische Referenzmerkmal an den elektronischen Identifikationsdienst über ein Kommunikationsnetzwerk zu übertragen. Dadurch wird der Vorteil erreicht, dass ein biometrisches Referenzmerkmal auf effiziente Weise bereitgestellt werden kann.

Die Nahfeldschnittstelle kann eine Kommunikationsschnittstelle zur Kommunikation mittels Near-Field-Communication (NFC), beispielsweise nach dem Standard ISO/IEC 14443 oder ISO/IEC 18092, sein. Die Nahfeldschnittstelle kann beispielsweise eine Induktivität als Nahfeldantenne umfassen.

Ein dritter Aspekt, welcher nicht Teil der Erfindung ist, betrifft einen elektronischen Identifikationsdienst zum Identifizieren eines Benutzers, wobei dem Benutzer ein Identifikationsdokument zugeordnet ist, mit: einer Kommunikationsschnittstelle zum Aussenden einer Aufforderung zur Übertragung eines biometrischen Merkmals des Benutzers an den elektronischen Identifikationsdienst; und einem Prozessor, welcher ausgebildet ist, das empfangene biometrische Merkmal mit einem biometrischen Referenzmerkmal zu vergleichen, um den Benutzer zu identifizieren. Dadurch wird der Vorteil erreicht, dass ein elektronischer Identifikationsdienst zum Identifizieren eines Benutzers bereitgestellt werden kann.

Gemäß einer Ausführungsform umfasst der elektronische Identifikationsdienst ferner: einen Speicher, in welchem das biometrische Referenzmerkmal in einer Datenbank vorgespeichert und aus der Datenbank auslesbar ist, um ein ausgelesenes biometrisches Referenzmerkmal zu erhalten. Dadurch wird der Vorteil erreicht, dass das biometrische Referenzmerkmal auf effiziente Weise bereitgestellt werden kann.

Gemäß einer Ausführungsform ist die Kommunikationsschnittstelle ferner ausgebildet, ansprechend auf eine Identifizierung des Benutzers über ein Kommunikationsnetzwerk eine Bestätigung der Identifizierung an ein Kommunikationsgerät oder einen elektronischen Netzwerkdienst zu übertragen. Dadurch wird der Vorteil erreicht, dass eine Bestätigung der Identifizierung bereitgestellt werden kann. Darüber hinaus wird so erreicht, dass für einen Vorgang zwischen einem Benutzer und einem Dienst eine Identitätsbestätigung erfolgt.

Gemäß einem vierten Aspekt betrifft die Erfindung ein Computerprogramm mit einem Programmcode zur Ausführung des Verfahrens zum Identifizieren eines Benutzers, wenn der Programmcode auf einem Computer ausgeführt wird. Dadurch wird der Vorteil erreicht, dass das Verfahren automatisiert und wiederholbar ausgeführt werden kann. Das Computerprogramm kann eine Folge von Befehlen für einen Prozessor eines Computers umfassen. Das Computerprogramm kann in Form eines maschinenlesbaren Programmcodes vorliegen.

Der Computer kann einen Prozessor, einen Speicher, eine Eingabeschnittstelle und/oder eine Ausgabeschnittstelle umfassen. Der Prozessor des Computers kann ausgebildet sein, das Computerprogramm auszuführen.

Das Computerprogramm kann auf dem Prozessor des Kommunikationsgerätes ausgeführt werden.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: ein schematisches Diagramm eines Verfahrens zum Identifizieren eines Benutzers unter Verwendung eines Kommunikationsgerätes gemäß einer Ausführungsform;
- Fig. 2: ein schematisches Diagramm eines Kommunikationsgerätes zum Identifizieren eines Benutzers gemäß einer Ausführungsform; und
- Fig. 3: ein schematisches Diagramm eines elektronischen Identifikationsdienstes zum Identifizieren eines Benutzers gemäß einer Ausführungsform.

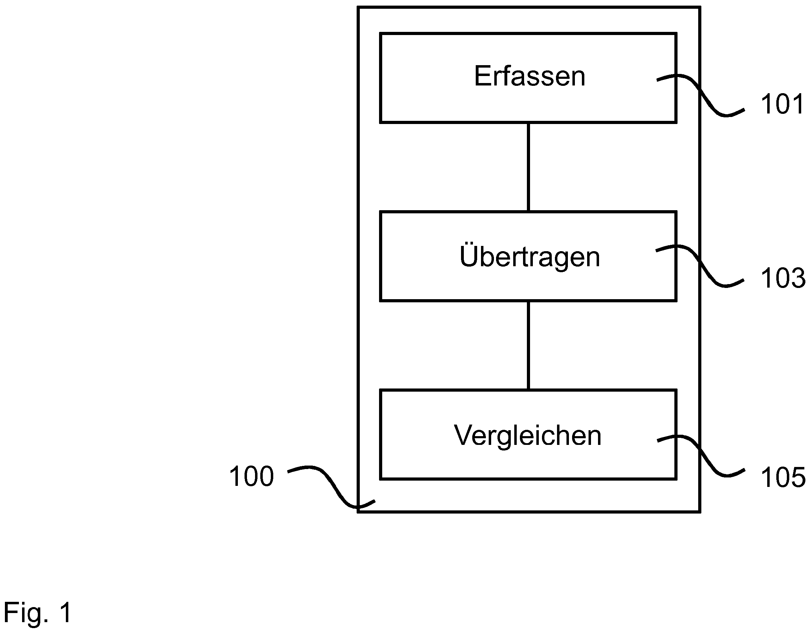

Fig. 1 zeigt ein schematisches Diagramm eines Verfahrens 100 zum Identifizieren eines Benutzers unter Verwendung eines Kommunikationsgerätes gemäß einer Ausführungsform.

Das Verfahren 100 umfasst ein Erfassen 101 eines biometrischen Merkmals des Benutzers mittels des Kommunikationsgerätes, um ein erfasstes biometrisches Merkmal zu erhalten, ein Übertragen 103 des erfassten biometrischen Merkmals an einen elektronischen Identifikationsdienst über ein Kommunikationsnetzwerk durch das Kommunikationsgerät, und ein Vergleichen 105 des erfassten biometrischen Merkmals mit einem biometrischen Referenzmerkmal durch den elektronischen Identifikationsdienst, um den Benutzer zu identifizieren.

Das Kommunikationsgerät kann ein Computer, ein Computerterminal, ein Handgerät, ein Mobiltelefon oder ein Smartphone sein, welches eine Erfassungseinrichtung und eine Kommunikationsschnittstelle umfassen kann.

Der Benutzer kann ein Dienstnutzer sein. Ferner kann dem Benutzer ein Identifikationsdokument zugeordnet sein.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Das biometrische Merkmal des Benutzers kann ein Fingerabdruck des Benutzers, ein Gesichtsbild des Benutzers, ein Irisabbild eines Auges des Benutzers oder ein Stimmmuster des Benutzers sein. Das biometrische Referenzmerkmal kann ein Fingerabdruck, ein Gesichtsbild, ein Irisabbild eines Auges oder ein Stimmmuster sein.

Das Erfassen 101 des biometrischen Merkmals des Benutzers kann durch das Kommunikationsgerät mittels einer Bildkamera, einer Videokamera, eines Fingerabdrucksensors und/oder eines Mikrophons durchgeführt werden.

Das Vergleichen 105 des erfassten biometrischen Merkmals mit dem biometrischen Referenzmerkmal kann mittels eines Mustervergleichs durchgeführt werden. Der Mustervergleich kann ein Vergleich von Bildmerkmalen, beispielsweise Ecken, Kanten, relativen Abständen, Positionen und/oder Lagen, sein. Ferner kann der Mustervergleich ein Vergleich von Stimmmustern sein.

Der elektronische Identifikationsdienst kann durch einen Computer oder durch einen Dienstserver bereitgestellt sein, welcher eine Kommunikationsschnittstelle und einen Prozessor umfassen kann. Der elektronische Identifikationsdienst kann als Identanbieter oder Identdienstanbieter für die Identifikation einer Mehrzahl von unterschiedlichen Benutzern vorgesehen sein.

Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

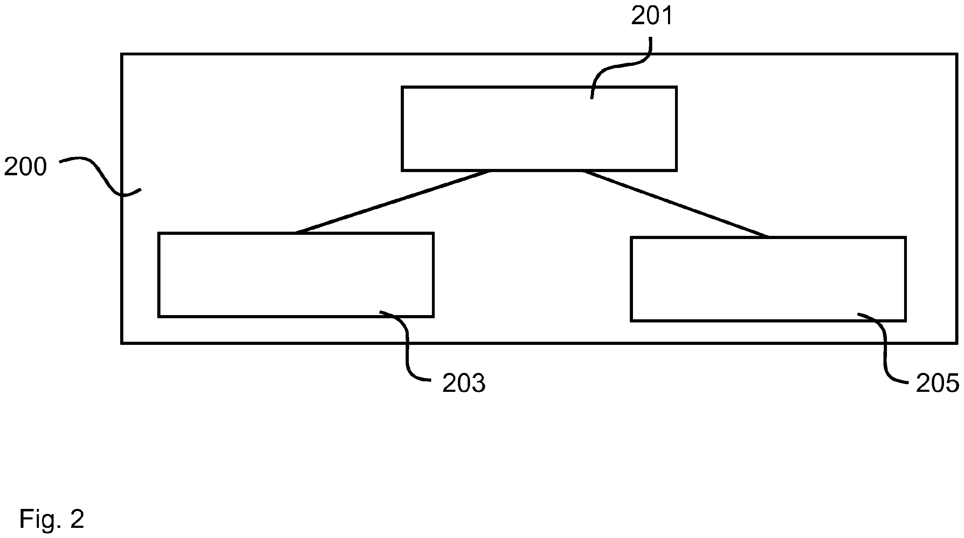

Fig. 2 zeigt ein schematisches Diagramm eines Kommunikationsgerätes 200 zum Identifizieren eines Benutzers gemäß einer Ausführungsform. Das Kommunikationsgerät 200 umfasst eine Kommunikationsschnittstelle 201, eine Erfassungseinrichtung 203 und eine weitere Kommunikationsschnittstelle 205. Hierbei ist die Kommunikationsschnittstelle 201 mit der Erfassungseinrichtung 203 und der weiteren Kommunikationsschnittstelle 205 verbunden.

Das Kommunikationsgerät 200 kann ein Computer, ein Computerterminal, ein Handgerät, ein Mobiltelefon oder ein Smartphone sein.

Die Kommunikationsschnittstelle 201 kann ausgebildet sein, eine Aufforderung zur Übersendung eines biometrischen Merkmals des Benutzers an einen elektronischen Identifikationsdienst zu empfangen.

Die Erfassungseinrichtung 203 kann ausgebildet sein, ein biometrisches Merkmal des Benutzers ansprechend auf den Empfang der Aufforderung zu erfassen, um ein erfasstes biometrisches Merkmal zu erhalten. Ferner kann die Erfassungseinrichtung 203 eine digitale Bildkamera zur Erfassung eines Gesichtsbildes des Benutzers, wobei das Gesichtsbild des Benutzers das erfasste biometrische Merkmal ist, oder eine digitale Bildkamera zur Erfassung eines Irisabbildes eines Auges des Benutzers, wobei das Irisabbild des Auges des Benutzers das erfasste biometrische Merkmal ist, oder einen Fingerabdrucksensor zum Erfassen eines Fingerabdruckes des Benutzers, wobei der Fingerabdruck des Benutzers das erfasste biometrische Merkmal ist, oder ein Mikrophon zur Erfassung eines Stimmmusters des Benutzers, wobei das Stimmmuster des Benutzers das biometrische Merkmal ist, aufweisen.

Die Kommunikationsschnittstelle 201 kann ferner ausgebildet sein, das erfasste biometrische Merkmal an den elektronischen Identifikationsdienst über ein Kommunikationsnetzwerk zu übertragen.

Die weitere Kommunikationsschnittstelle 205 kann ausgebildet sein, ein biometrische Referenzmerkmal aus einem elektronischen Schaltkreis des Identifikationsdokumentes auszulesen. Ferner kann die weitere Kommunikationsschnittstelle 205 eine Nahfeldschnittstelle umfassen. Die Nahfeldschnittstelle kann eine Kommunikationsschnittstelle zur Kommunikation mittels Near-Field-Communication (NFC), beispielsweise nach dem Standard ISO/IEC 14443 oder ISO/IEC 18092, sein. Die Nahfeldschnittstelle kann beispielsweise eine Induktivität als Nahfeldantenne umfassen.

Ferner kann die Kommunikationsschnittstelle 201 ausgebildet sein, das biometrische Referenzmerkmal an den elektronischen Identifikationsdienst über ein Kommunikationsnetzwerk zu übertragen.

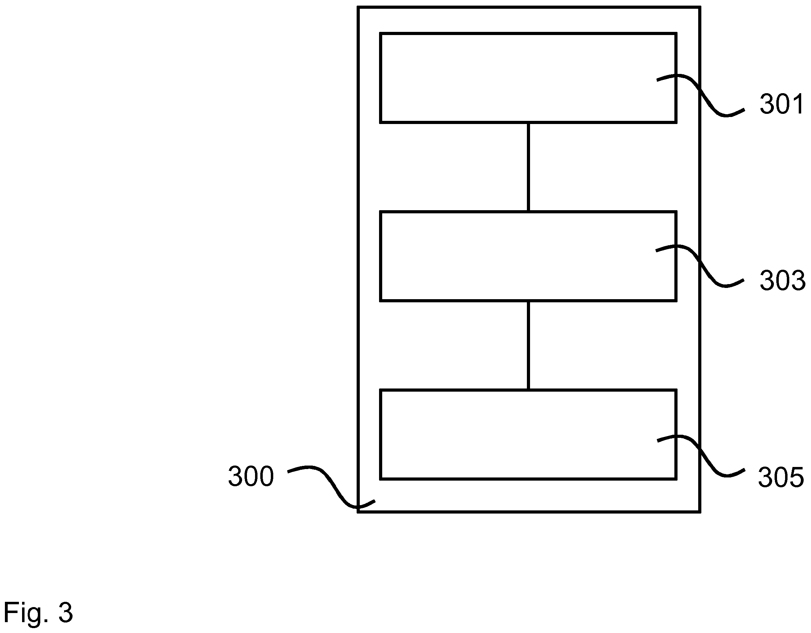

Fig. 3 zeigt ein schematisches Diagramm eines elektronischen Identifikationsdienstes 300 zum Identifizieren eines Benutzers gemäß einer Ausführungsform. Der elektronische Identifikationsdienst 300 umfasst eine Kommunikationsschnittstelle 301, einen Prozessor 303 und einen Speicher 305. Der Prozessor 303 ist mit der Kommunikationsschnittstelle 301 und dem Speicher 305 verbunden.

Die Kommunikationsschnittstelle 301 kann ausgebildet sein, eine Aufforderung zur Übertragung eines biometrischen Merkmals des Benutzers an den elektronischen Identifikationsdienst 300 auszusenden. Ferner kann die Kommunikationsschnittstelle 301 ausgebildet sein, ansprechend auf eine Identifizierung des Benutzers über ein Kommunikationsnetzwerk eine Bestätigung der Identifizierung an ein Kommunikationsgerät oder einen elektronischen Netzwerkdienst zu übertragen.

Der Prozessor 303 kann ausgebildet sein, ein empfangenes biometrisches Merkmal mit einem biometrischen Referenzmerkmal zu vergleichen, um den Benutzer zu identifizieren.

Gemäß einer Ausführungsform können auch andere Daten abgeglichen werden, beispielsweise optisch erfasste Personendaten mit denen im Chip und die Echtheitsprüfung der Chipdaten mittels deren Chipsignatur und öffentlich verfügbaren Zertifikaten, wie eine Chipauthentifizierung nach dem öffentlichen Verfahren Passive Authentication. Dies kann sowohl von dem elektronischen Identifikationsdienst 300 als auch von dem Kommunikationsgerät durchgeführt werden.

In dem Speicher 305 kann das biometrische Referenzmerkmal in einer Datenbank vorgespeichert und aus der Datenbank auslesbar sein, um ein ausgelesenes biometrisches Referenzmerkmal zu erhalten.

Gemäß einer Ausführungsform kann die Identität eines Benutzers auf Vertrauensbasis bzw. schwach abgesichert geprüft und bestimmt werden, wobei Identifikationsdokumente oder ID-Dokumente schwach, d.h. anhand eine Untermenge von Sicherheitsmerkmalen, geprüft werden.

Gemäß einer Ausführungsform kann die Identität eines Benutzer oder einer Person mittels eines Identifikationsdokumentes oder ID-Dokument und einem Kommunikationsgerät 200 oder Smartphone mobil gegenüber einem elektronischen Netzwerkdienst oder Diensteanbieter nachgewiesen werden, ohne eine Filiale eines Anbieters von Identifikationsdiensten oder Identanbieters aufzusuchen.

Gemäß einer Ausführungsform kann ein Benutzer oder Dienstnutzer zur Identifizierung eine Filiale eines Anbieters von Identifikationsdiensten oder des Identdienstanbieters aufsuchen. Zur Identifizierung des Benutzers können die Personendaten von einem Identifikationsdokument oder vom ID-Dokument durch eine Person, beispielsweise einen Mitarbeiter des Anbieters von Identifikationsdiensten, aufgenommen bzw. abgeglichen werden. Hierbei kann eine schwache Prüfung des Identifikationsdokumentes oder ID-Dokumentes durchgeführt werden, beispielsweise kann eine Untermenge von Sicherheitsmerkmalen des Identifikationsdokumentes überprüft werden.

Gemäß einer Ausführungsform können bei elektronischen Identifikationsdiensten 300 oder mobilen Lösungen die Personendaten des Benutzers und/oder weitere Daten erfasst werden. Ferner können rückversichernde Nachfragen ausgetauscht werden.

Gemäß einer Ausführungsform können Geschäftsprozesse an bereits bestätigte Identitäten geknüpft werden, beispielsweise an ein Bankkonto und/oder Mobiltelefonvertragsdaten.

Gemäß einer Ausführungsform kann der Benutzer oder der Dienstnutzer ein Identifikationsdokument oder ID-Dokument und ein Kommunikationsgerät 200 oder Smartphone mit einer Erfassungseinrichtung 203 oder einer App oder Anwendung zur Durchführung des Verfahrens 100 zur Identifizierung des Benutzers verwenden.

Gemäß einer Ausführungsform kann der Benutzer seine Identität gegenüber einem elektronischen Netzwerkdienst oder Dienstanbieter nachweisen, indem die Erfassungseinrichtung 203 oder die App das Identifikationsdokument oder ID-Dokument ausliest und einzelne Sicherheitsmerkmale, beispielsweise Prüfziffern, Signatur des elektronischen Schaltkreises des Identifikationsdokumentes oder des integrierten Chips überprüft. Ferner kann der elektronische Netzwerkdienst oder Dienstanbieter diesen Schritt anstoßen.

Gemäß einer Ausführungsform kann das biometrische Merkmal oder können die Daten an einen elektronischen Identifikationsdienst 300 oder Identservice übertragen werden.

Gemäß einer Ausführungsform kann sich ein Call-Center des Anbieters des elektronischen Identifikationsdienstes direkt mit dem Benutzer des Kommunikationsgerätes 200 oder der Person auf dem Smartphone verbinden, um die Personendaten, insbesondere das Gesichtsbild, abzugleichen, vorzugsweise mittels einer Videokonferenzverbindung oder Videoverbindung.

Gemäß einer Ausführungsform kann sich das Call-Center des Anbieters des elektronischen Identifikationsdienstes asynchron mit dem Benutzer des Kommunikationsgerätes 200 verbinden, um eine Videoaufnahme des Gesichts des Benutzers, beispielsweise ein Gesichtsvideo, oder eine aufgenommene Gesichtsbildsequenz an den elektronischen Identifikationsdienst 300 zu übertragen und dort in einem Stapelverarbeitungsverfahren effizient abzuarbeiten. Dadurch kann der elektronische Identifikationsdienst 300 kostengünstig bereitgestellt werden.

Gemäß einer Ausführungsform kann der elektronische Identifikationsdienst 300 oder der Identservice die Identität innerhalb kurzer Zeit dem elektronischen Netzwerkdienst oder Dienstanbieter bestätigen und eine Rückmeldung an den Benutzer übertragen oder an die Person geben.

Gemäß einer Ausführungsform kann dem elektronischen Netzwerkdienst oder Dienstanbieter ein Sicherheitslevel, beispielsweise ein Wahrscheinlichkeitsmaß für die Identifizierung des Benutzers, übermittelt werden. Der Sicherheitslevel kann abhängig vom erfassten biometrischen Merkmal, vom geprüften Sicherheitsmerkmal des Identifikationsdokumentes oder ID-Dokumentes, und/oder vom Kommunikationsgerät 200 des Benutzers oder Smartphone der Person bestimmt werden.

Gemäß einer Ausführungsform können zu Bestimmung des Sicherheitslevels weitere Abgleiche, beispielsweise mit verfügbaren Sanktionslisten, beim elektronischen Identifikationsdienst 300 oder Identservice vorgenommen werden.

Gemäß einer Ausführungsform kann der Vorteil erreicht werden, dass eine Identitätsbestätigung mit hoher Güte im privatwirtschaftlichen Umfeld bereitgestellt werden kann.

Gemäß einer Ausführungsform kann der Vorteil erreicht werden, dass ein Identitätsnachweis mobil durchgeführt werden kann.

Gemäß einer Ausführungsform kann der Vorteil erreicht werden, dass Geschäftsprozesse verbessert werden können.

Gemäß einer Ausführungsform kann der Vorteil erreicht werden, dass das Verfahren 100 zum Identifizieren eines Benutzers einfach realisiert werden kann.

### BEZUGSZEICHENLISTE

- 100: Verfahren zum Identifizieren eines Benutzers
- 101: Erfassen eines biometrischen Merkmals des Benutzers
- 103: Übertragen des erfassten biometrischen Merkmals
- 105: Vergleichen des erfassten biometrischen Merkmals mit einem biometrischen Referenzmerkmal

- 200: Kommunikationsgerät
- 201: Kommunikationsschnittstelle
- 203: Erfassungseinrichtung
- 205: Weitere Kommunikationsschnittstelle

- 300: Elektronischer Identifikationsdienst
- 301: Kommunikationsschnittstelle
- 303: Prozessor
- 305: Speicher

## Patentansprüche

1. Verfahren (100) zum Identifizieren eines Benutzers unter Verwendung eines Kommunikationsgerätes (200), wobei dem Benutzer ein Identifikationsdokument zugeordnet ist, mit:
Erfassen (101) eines biometrischen Merkmals des Benutzers mittels des Kommunikationsgerätes (200), um ein erfasstes biometrisches Merkmal zu erhalten;
Übertragen (103) des erfassten biometrischen Merkmals an einen elektronischen Identifikationsdienst (300) über ein Kommunikationsnetzwerk durch das Kommunikationsgerät (200);
Auslesen eines biometrischen Referenzmerkmals aus einem elektronischen Schaltkreis des Identifikationsdokumentes mittels des Kommunikationsgerätes (200), um ein ausgelesenes biometrisches Referenzmerkmal zu erhalten;
Übertragen des ausgelesenen biometrischen Referenzmerkmals durch das Kommunikationsgerät (200) über das Kommunikationsnetzwerk an den elektronischen Identifikationsdienst (300), insbesondere gemeinsam mit dem erfassten biometrischen Merkmal,
wobei das Auslesen des biometrischen Referenzmerkmals aus dem elektronischen Schaltkreis des Identifikationsdokumentes mittels des Kommunikationsgerätes (200) ferner ein Auslesen eines Personendatums umfasst, um ein ausgelesenes Personendatum zu erhalten, und wobei das Übertragen des ausgelesenen biometrischen Referenzmerkmals durch das Kommunikationsgerät (200) über das Kommunikationsnetzwerk an den elektronischen Identifikationsdienst (300) ferner ein Übertragen des ausgelesenen Personendatums an den elektronischen Identifikationsdienst (300) umfasst; und
Vergleichen (105) des erfassten biometrischen Merkmals mit dem ausgelesenen biometrischen Referenzmerkmal durch den elektronischen Identifikationsdienst (300), um den Benutzer zu identifizieren,
wobei der elektronische Identifikationsdienst (300) ferner ansprechend auf eine Identifizierung des Benutzers über ein Kommunikationsnetzwerk eine Bestätigung der Identifizierung an einen elektronischen Netzwerkdienst überträgt.

2. Verfahren (100) nach Anspruch 1, wobei das erfasste biometrische Merkmal ein Gesichtsbild des Benutzers oder ein Stimmmuster des Benutzers oder ein Fingerabdruck des Benutzers oder ein Irisabbild eines Auges des Benutzers ist.

3. Verfahren (100) nach einem der vorstehenden Ansprüche, mit:
Empfangen einer Aufforderung zum Übertragen des erfassten biometrischen Merkmals an den elektronischen Identifikationsdienst (300) durch das Kommunikationsgerät (200); und
Übertragen des erfassten biometrischen Merkmals an den elektronischen Identifikationsdienst (300) ansprechend auf den Empfang der Aufforderung durch das Kommunikationsgerät (200), insbesondere mittels einer Videokonferenzverbindung zwischen dem Kommunikationsgerät (200) und dem elektronischen Identifikationsdienst (300) oder mittels einer Übertragung eines Standbildes.

4. Verfahren (100) nach einem der vorstehenden Ansprüche, wobei das ausgelesene Personendatum ansprechend auf eine Identifizierung des Benutzers durch den elektronischen Identifikationsdienst (300) über ein Kommunikationsnetzwerk an den elektronischen Netzwerkdienst übertragen wird.

5. Verfahren (100) nach einem der vorstehenden Ansprüche, wobei das Auslesen des biometrischen Referenzmerkmales aus dem elektronischen Schaltkreis des Identifikationsdokumentes unter Verwendung von Nahfeldkommunikation oder von Radiofrequenzidentifikation durchgeführt wird.

6. Computerprogramm mit einem Programmcode zur Ausführung des Verfahrens (100) zum Identifizieren eines Benutzers nach einem der Ansprüche 1 bis 5, wenn der Programmcode auf einem Kommunikationsgerät (200) und einem elektronischen Identifikationsdienst (300) ausgeführt wird.

## Claims

1. A method (100) for identifying a user using a communication device (200), wherein an identification document is assigned to the user, the method (100) comprising:
capturing (101) a biometric feature of the user by means of the communication device (200) in order to obtain a captured biometric feature;
transmitting (103) the captured biometric feature to an electronic identification service (300) via a communication network by the communication device (200); and
reading out a biometric reference feature from an electronic circuit of the identification document by the communication device (200) in order to obtain a read-out biometric reference feature; and
transmitting the read-out biometric reference feature by the communication device (200) via the communication network to the electronic identification service (300), in particular together with the captured biometric feature,
wherein the reading out of the biometric reference feature from the electronic circuit of the identification document by the communication device (200) further comprises reading out a personal date in order to obtain a read-out personal date, and wherein the transmitting of the read-out biometric reference feature by the communication device (200) via the communication network to the electronic identification service (300) further comprises transmitting the read-out personal date to the electronic identification service (300); and
comparing (105) the captured biometric feature with the read-out biometric reference feature by the electronic identification service (300) in order to identify the user,
wherein the electronic identification service (300) further transmits a certification of the identification to an electronic network service via a communication network in response to an identification of the user.

2. The method (100) according to claim 1, wherein the captured biometric feature is a facial image of the user or a voice pattern of the user or a fingerprint of the user or an iris image of an eye of the user.

3. The method (100) according to any one of the preceding claims, comprising:
receiving a request to transmit the captured biometric feature to the electronic identification service (300) by the communication device (200); and
transmitting the captured biometric feature to the electronic identification service (300) in response to the receipt of the request by the communication device (200), in particular by means of a video conference connection between the communication device (200) and the electronic identification service (300) or by means of a transmission of a still image.

4. The method (100) according to any one of the preceding claims, wherein the read-out personal date is transmitted to the electronic network service via a communication network in response to an identification of the user by the electronic identification service (300).

5. The method (100) according to any one of the preceding claims, wherein the reading out of the biometric reference feature from the electronic circuit of the identification document is performed using near-field communication or radio frequency identification.

6. Computer program comprising a program code for executing the method (100) for identifying a user according to one of claims 1 to 5, when the program code is executed on a communication device (200) and an electronic identification service (300).

## Revendications

1. Procédé (100) pour identifier un utilisateur en utilisant un appareil de communication (200), un document d'identification étant associé à l'utilisateur, comprenant :
l'acquisition (101) d'une caractéristique biométrique de l'utilisateur au moyen de l'appareil de communication (200) afin d'obtenir une caractéristique biométrique acquise ;
la transmission (103), par l'appareil de communication (200), de la caractéristique biométrique acquise à un service d'identification (300) électronique par le biais d'un réseau de communication ;
la lecture d'une caractéristique de référence biométrique à partir d'un circuit électronique du document d'identification au moyen de l'appareil de communication (200) afin d'obtenir une caractéristique de référence biométrique lue ;
la transmission, par l'appareil de communication (200), de la caractéristique de référence biométrique au service d'identification (300) électronique par le biais du réseau de communication, notamment conjointement avec la caractéristique biométrique acquise,
la lecture de la caractéristique de référence biométrique à partir du circuit électronique du document d'identification au moyen de l'appareil de communication (200) comprenant en outre la lecture d'une donnée personnelle afin d'obtenir une donnée personnelle lue, et la transmission de la caractéristique de référence biométrique par l'appareil de communication (200) au service d'identification (300) électronique par le biais du réseau de communication comprenant en outre une transmission de la donnée personnelle lue au service d'identification (300) électronique ; et
la comparaison (105) de la caractéristique biométrique acquise avec la caractéristique de référence biométrique lue par le service d'identification (300) électronique afin d'identifier l'utilisateur,
le service d'identification (300) électronique, réagissant en plus à une identification de l'utilisateur, transmettant par le biais d'un réseau de communication une confirmation de l'identification à un service de réseau électronique.

2. Procédé (100) selon la revendication 1, la caractéristique biométrique acquise étant une photo du visage de l'utilisateur ou une empreinte vocale de l'utilisateur ou une empreinte digitale de l'utilisateur ou une image de l'iris d'un œil de l'utilisateur.

3. Procédé (100) selon l'une des revendications précédentes, comprenant :
la réception d'une demande de transmission de la caractéristique biométrique acquise au service d'identification (300) électronique par l'appareil de communication (200) ; et
la transmission de la caractéristique biométrique acquise au service d'identification (300) électronique en réaction à la réception de la demande par l'appareil de communication (200), notamment au moyen d'une connexion de vidéoconférence entre l'appareil de communication (200) et le service d'identification (300) électronique ou au moyen d'une communication d'une image fixe.

4. Procédé (100) selon l'une des revendications précédentes, la donnée personnelle lue étant transmise au service de réseau électronique par le biais d'un réseau de communication en réaction à une identification de l'utilisateur par le service d'identification (300) électronique.

5. Procédé (100) selon l'une des revendications précédentes, la lecture de la caractéristique de référence biométrique à partir du circuit électronique du document d'identification étant effectuée en utilisant la communication de champ proche ou l'identification par radiofréquence.

6. Programme informatique comprenant un code de programme destiné à mettre en œuvre le procédé (100) pour identifier un utilisateur selon l'une des revendications 1 à 5 lorsque le code de programme est exécuté sur un appareil de communication (200) et un service d'identification (300) électronique.
